# EUROPEAN PATENT APPLICATION

(11) **EP 4 847 880 A2**
(43) Date of publication of application: **02.12.2026**
(21) Application number: 26181738.1
(22) Date of filing: 28.05.2026
(51) Int. Cl.: G01B 21/08

(54) **INSPECTING TURBINE ENGINE COMPONENT USING MEASURED TEMPERATURE DISTRIBUTION**

(30) Priority: 28.05.2025 US 202519221057
(71) Applicant: RTX Corporation, Farmington, CT 06032 (US)
(72) Inventor: SIW, Sin Chien, Simsbury, 06070 (US); GUSTAFSON, Eric F., Glastonbury, 06033 (US); OUYANG, Zhong, Glastonbury, 06033 (US); KIREJCZYK, Maria C., Murrells Inlet, 29576 (US)
(74) Representative: Dehns

(57) **Abstract**

A method of inspection is provided during which a turbine engine component is arranged with a fixture. The turbine engine component includes an internal cooling circuit and a first exterior surface. Air is directed into the internal cooling circuit. The first exterior surface is heated, while the air is directed into the internal cooling circuit, such that the first exterior surface is a heated first exterior surface. A first temperature distribution is measured along the heated first exterior surface to provide first measurement data indicative of the first temperature distribution. A wall thickness of the turbine engine component is determined along the first exterior surface using the first measurement data.

## Description

### BACKGROUND OF THE DISCLOSURE

### 1. Technical Field

This disclosure relates generally to component inspection and, more particularly, to non-destructive component inspection.

### 2. Background Information

Various non-destructive inspection methods are known in the art including ultrasonic inspection methods. While these known non-destructive inspection methods have various benefits, there is still room in the art for improvement.

### SUMMARY OF THE DISCLOSURE

According to an aspect of the present disclosure, a method of inspection is provided during which a turbine engine component is arranged with a fixture. The turbine engine component includes an internal cooling circuit and a first exterior surface. Air is directed into the internal cooling circuit. The first exterior surface is heated, while the air is directed into the internal cooling circuit, such that the first exterior surface is a heated first exterior surface. A first temperature distribution is measured along the heated first exterior surface to provide first measurement data indicative of the first temperature distribution. A wall thickness of the turbine engine component is determined along the first exterior surface using the first measurement data.

According to another aspect of the present disclosure, another method of inspection is provided during which a turbine engine component is arranged with a fixture. The turbine engine component includes an internal cooling circuit and a first exterior surface. The internal cooling circuit includes one or more cooling apertures formed in the first exterior surface. The first exterior surface is heated using a light source. A first temperature distribution is measured along at least a first area of the first exterior surface using a camera, during and/or after the heating of the first exterior surface, to provide first measurement data indicative of the first temperature distribution. The first area of the first exterior surface includes at least one of the cooling apertures. A wall thickness of the turbine engine component is determined along an entirety of the first area of the first exterior surface using the first measurement data.

According to still another aspect of the present disclosure, another method of inspection is provided during which a turbine engine component is arranged with a fixture using a robotic manipulator. The turbine engine component includes a first exterior surface. The first exterior surface is heated using a light source. A first temperature distribution is measured along the first exterior surface using a camera, during and/or after the heating of the first exterior surface, to provide first measurement data indicative of the first temperature distribution. A wall thickness of the turbine engine component is determined along the first exterior surface using the first measurement data. Whether the wall thickness of the turbine engine component along the first exterior surface satisfies a wall thickness specification is determined. The turbine engine component is moved into a first designated area using the robotic manipulator when the wall thickness of the turbine engine component along the first exterior surface is determined to satisfy the wall thickness specification. Alternatively, the turbine engine component is moved into a second designated area using the robotic manipulator when the wall thickness of the turbine engine component along the first exterior surface is determined not to satisfy the wall thickness specification.

The following optional features may be applied to any of the above aspects.

The light source may be or otherwise include a pulsed light. The camera may be or otherwise include an infrared camera.

The method may also include supplying pressurized air to the internal cooling circuit during the heating of the first exterior surface and the measuring of the first temperature distribution.

The method may also include determining whether the wall thickness of the turbine engine component along the first exterior surface satisfies a wall thickness specification for the turbine engine component.

The method may also include moving the turbine engine component into a designated area using a robotic manipulator when the wall thickness of the turbine engine component along the first exterior surface is determined to satisfy the wall thickness specification.

The method may also include moving the turbine engine component into a designated area using a robotic manipulator when the wall thickness of the turbine engine component along the first exterior surface is determined not to satisfy the wall thickness specification.

The wall thickness of the turbine engine component along the first exterior surface may be determined utilizing artificial intelligence.

The wall thickness of the turbine engine component along the first exterior surface may be determined utilizing machine learning.

The method may also include: heating a second exterior surface of the turbine engine component, while the air is directed into the internal cooling circuit, such that the second exterior surface is a heated second exterior surface; measuring a second temperature distribution along the heated second exterior surface to provide second measurement data indicative of the second temperature distribution; and determining the wall thickness of the turbine engine component along the second exterior surface using the second measurement data.

The air may be directed through the fixture and into the internal cooling circuit.

The internal cooling circuit may include one or more cooling apertures formed in the first exterior surface.

The first exterior surface may be heated using a non-contact heat source.

The first exterior surface may be heated using a pulsed light.

The first temperature distribution may be measured using a non-contact temperature sensor.

The first temperature distribution may be measured using an infrared camera. The turbine engine component may be or otherwise include an airfoil.

The turbine engine component may be or otherwise include a turbine blade.

The turbine engine component may be or otherwise include a turbine vane.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft propulsion system.
FIG. 2 is a partial schematic illustration of an engine section for the aircraft propulsion system.
FIG. 3 is a schematic illustration of a blade airfoil between a platform and a rotor shroud.
FIG. 4 is a tip end view illustration of the blade airfoil.
FIG. 5 is a flow diagram of a method for inspecting one or more components of an aircraft powerplant.
FIG. 6 is a schematic illustration of a robotic manipulator configured to move components during an inspection.
FIG. 7 is a schematic illustration during an inspection of a first exterior surface of a component.
FIG. 8 is a schematic illustration during an inspection of a second exterior surface of the component.

### DETAILED DESCRIPTION

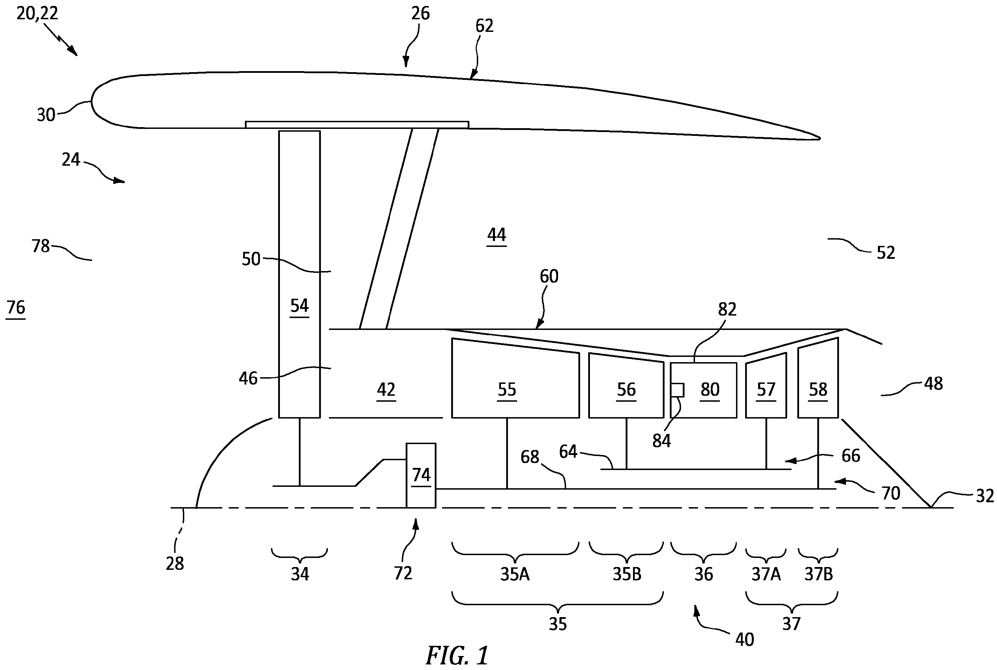

The present disclosure includes methods and systems for inspecting one or more components. This inspection may be a non-destructive inspection and/or a non-contact inspection of the components as described below in further detail. For ease of description, the inspected components are described below as components of a powerplant 20 for an aircraft, an exemplary embodiment of which is shown in FIG. 1. The aircraft may be an airplane, a rotorcraft (e.g., a helicopter), a drone (e.g., an unmanned aerial vehicle (UAV)), or any other manned or unmanned aerial vehicle or system. The aircraft powerplant 20 may be a propulsion system 22 for the aircraft and, more particularly, as a turbofan propulsion system. The aircraft powerplant 20 of the present disclosure, however, is not limited to such an exemplary propulsion system. The aircraft propulsion system 22, for example, may alternatively be configured as a turbojet propulsion system, a turboprop propulsion system, a turboshaft propulsion system, a propfan propulsion system, a pusher fan propulsion system, or any other type of ducted and/or open propulsor rotor propulsion system. Moreover, the aircraft powerplant 20 is not limited to propulsion system applications nor aircraft applications. The aircraft powerplant 20, for example, may also (or alternatively) be configured as an electrical power system for the aircraft; e.g., an auxiliary power unit (APU). In another example, the powerplant 20 may be configured as an electrical power system for a land-based (e.g., industrial), marine or other installation.

The aircraft propulsion system 22 of FIG. 1 includes a gas turbine engine 24 (e.g., a turbofan engine) housed within a stationary propulsion system housing 26. The aircraft propulsion system 22 extends axially along an axis 28 of the of the aircraft propulsion system 22 between an axial upstream, forward end 30 of the aircraft propulsion system 22 and an axial downstream, aft end 32 of the aircraft propulsion system 22. Briefly, the propulsion system axis 28 may be a centerline axis of the aircraft propulsion system 22, the turbine engine 24 and/or one or more of its members. The propulsion system axis 28 may also or alternatively be a rotational axis for one or more members of the turbine engine 24.

The aircraft propulsion system 22 and its turbine engine 24 of FIG. 1 include a propulsor section 34 (e.g., a fan section), a compressor section 35, a combustor section 36 and a turbine section 37. The compressor section 35 of FIG. 1 includes a low pressure compressor (LPC) section 35A and a high pressure compressor (HPC) section 35B. The turbine section 37 of FIG. 1 includes a high pressure turbine (HPT) section 37A and a low pressure turbine (LPT) section 37B. At least (or only) the LPC section 35A, the HPC section 35B, the combustor section 36, the HPT section 37A and the LPT section 37B collectively form a core 40 of the turbine engine 24. The aircraft propulsion system 22 and its turbine engine 24 of FIG. 1 also include a core flowpath 42 (e.g., an annular core flowpath) and a bypass flowpath 44 (e.g., an annular bypass flowpath). The core flowpath 42 extends sequentially through the LPC section 35A, the HPC section 35B, the combustor section 36, the HPT section 37A and the LPT section 37B from an airflow inlet 46 into the core flowpath 42 to a combustion products exhaust 48 out from the core flowpath 42. The bypass flowpath 44 extends through a bypass duct from an airflow inlet 50 into the bypass flowpath 44 to an airflow exhaust 52 from the bypass flowpath 44. The bypass flowpath 44 and its bypass duct are configured to bypass (e.g., are disposed radially outboard of and extend along) the engine core 40.

The propulsor section 34, the LPC section 35A, the HPC section 35B, the combustor section 36, the HPT section 37A and the LPT section 37B may be arranged sequentially along the propulsion system axis 28. The propulsor section 34 includes a bladed propulsor rotor 54; e.g., a fan rotor. The LPC section 35A includes a bladed low pressure compressor (LPC) rotor 55. The HPC section 35B includes a bladed high pressure compressor (HPC) rotor 56. The HPT section 37A includes a bladed high pressure turbine (HPT) rotor 57. The LPT section 37B includes a bladed low pressure turbine (LPT) rotor 58. These engine rotors 54-58 are housed within the propulsion system housing 26. The propulsion system housing 26 of FIG. 1, for example, includes an inner housing structure 60 (e.g., a core case structure) and an outer housing structure 62 (e.g., a propulsor case structure). The inner housing structure 60 may house one or more of the engine sections 35A-37B and the engine rotors 55-58. The outer housing structure 62 may house at least the propulsor section 34 and its propulsor rotor 54.

Each of the engine rotors 54-58 includes a rotor base (e.g., a disk or a hub) and a plurality of rotor blades. The rotor blades may be arranged into one or more stages axially along the respective engine rotor 54-58. The rotor blades in each stage are arranged and may be equispaced circumferentially around the respective rotor base in an annular array. Each of the rotor blades is connected to the respective rotor base. The rotor blades, for example, may be formed integral with or mechanically fastened, welded, brazed and/or otherwise attached to the respective rotor base. Each of the rotor blades projects spanwise (e.g., radially) out from the respective rotor base to a distal tip of the respective rotor blade. Note, although not shown for ease of illustration, each rotor blade stage of a respective engine rotor 55-58 may be disposed next to and upstream or downstream of a respective neighboring stage of stator vanes for that respective engine section 35A, 35B, 37A, 37B along the core flowpath 42. At least some of the rotor blade stages of a respective engine rotor 55-58 may also be disposed between a neighboring pair of upstream and downstream stages of stator vanes along the core flowpath 42.

The HPC rotor 56 is coupled to and rotatable with the HPT rotor 57. The HPC rotor 56 of FIG. 1, for example, is connected to the HPT rotor 57 through a high speed shaft 64. At least (or only) the HPC rotor 56, the HPT rotor 57 and the high speed shaft 64 collectively form a high speed rotating structure 66; e.g., a high speed spool of the turbine engine 24 and its engine core 40. The high speed rotating structure 66 of FIG. 1 and its members 56, 57 and 64 are rotatable about the propulsion system axis 28.

The LPC rotor 55 is coupled to and rotatable with the LPT rotor 58. The LPC rotor 55 of FIG. 1, for example, is connected to the LPT rotor 58 through a low speed shaft 68. At least (or only) the LPC rotor 55, the LPT rotor 58 and the low speed shaft 68 collectively form a low speed rotating structure 70; e.g., a low speed spool of the turbine engine 24 and its engine core 40. The low speed rotating structure 70 of FIG. 1 and its members 55, 58 and 68 are rotatable about the propulsion system axis 28.

The low speed rotating structure 70 is coupled to the propulsor rotor 54 through a drivetrain 72. This drivetrain 72 may be configured as a geared drivetrain, where a geartrain 74 (e.g., a transmission, a speed change device, an epicyclic geartrain, etc.) is disposed between and operatively couples the propulsor rotor 54 to the low speed rotating structure 70 and its LPT rotor 58. With this arrangement, the propulsor rotor 54 may rotate at a different (e.g., slower) rotational speed than the low speed rotating structure 70 and its LPT rotor 58. Here, the propulsor rotor 54 and the low speed rotating structure 70 may rotate in a common (the same) direction about the propulsion system axis 28 or in opposite directions about the propulsion system axis 28 depending, for example, upon the specific configuration of the geartrain 74. Alternatively, the drivetrain 72 may be configured as a direct-drive drivetrain, where the geartrain 74 is omitted. With such an arrangement, the propulsor rotor 54 rotates at a common (the same) rotational speed as the low speed rotating structure 70 and its LPT rotor 58.

During operation of the aircraft propulsion system 22 of FIG. 1, ambient air from an environment 76 external to the aircraft and its aircraft propulsion system 22 enters the aircraft propulsion system 22 and its turbine engine 24 through an airflow inlet 78. This air is propelled by the rotating propulsor rotor 54 in a downstream, aft direction towards the propulsion system aft end 32.

An outer stream of the air propelled by the rotating propulsor rotor 54 is directed into the bypass flowpath 44 through its bypass inlet 50. The air entering the bypass flowpath 44 may be referred to as "bypass air". This bypass air flows through the bypass flowpath 44 and is directed out of the aircraft propulsion system 22 through the bypass exhaust 52 to provide forward thrust. This propulsion of the bypass air may account for a majority of the forward thrust generated by the aircraft propulsion system 22 and its turbine engine 24 of FIG. 1.

An inner stream of the air propelled by the rotating propulsor rotor 54 is directed into the core flowpath 42 through its core inlet 46. The air entering the core flowpath 42 may be referred to as "core air". This core air is compressed by the LPC rotor 55 and the HPC rotor 56 and is directed into a combustion chamber 80 (e.g., annular combustion chamber) of a combustor 82 (e.g., annular combustor) in the combustor section 36. Fuel is injected into the combustion chamber 80 by one or more fuel injectors 84 and mixed with the compressed core air to provide a fuel-air mixture. This fuel-air mixture is ignited and combustion products thereof flow through and sequentially drive rotation of the HPT rotor 57 and the LPT rotor 58. The rotation of the HPT rotor 57 and the LPT rotor 58 respectively drive rotation of the HPC rotor 56 and the LPC rotor 55 and, thus, compression of the air received from the core inlet 46. The rotation of the LPT rotor 58 also drives rotation of the propulsor rotor 54 through the drivetrain 72.

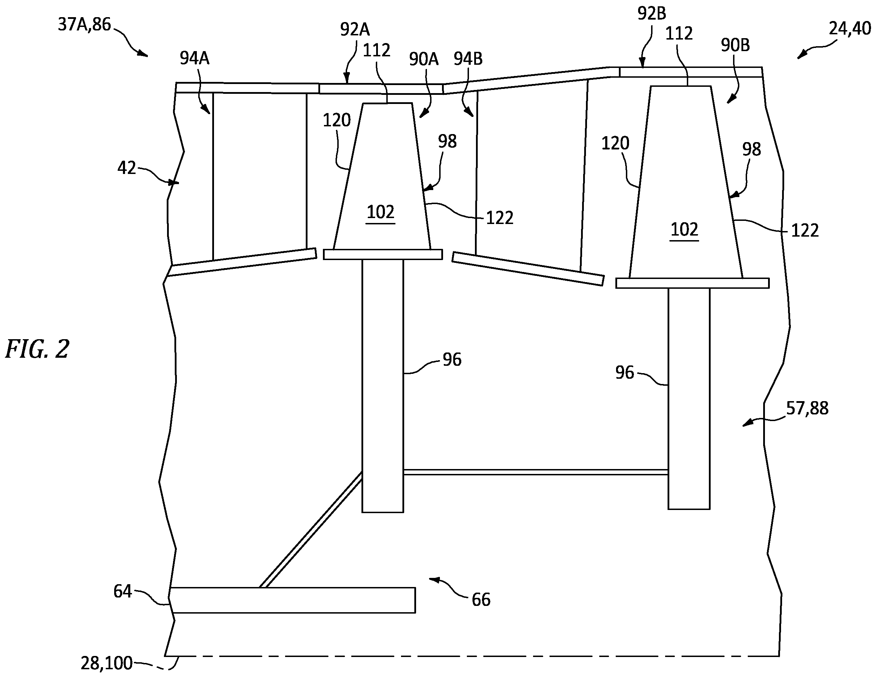

FIG. 2 illustrates a section 86 of the turbine engine 24. For ease of description, this engine section 86 is described below as the HPT section 37A in the turbine engine 24. However, it is contemplated the engine section 86 may alternatively be the LPT section 37B in the turbine engine 24 (see FIG. 1) or another section of the turbine engine 24 with (e.g., internally air cooled) engine components which would benefit from inspections as described below.

The engine section 86 of FIG. 2 includes an engine rotor 88 (e.g., the HPT rotor 57) configured with a plurality of rotor stages 90A and 90B (generally referred to as "90"). The engine section 86 of FIG. 2 includes a respective outer rotor shroud 92A, 92B (generally referred to as "92") radially outboard of and circumscribing each rotor stage 90A, 90B, where each rotor shroud 92 may be configured as a blade outer air seal (BOAS) for the respective rotor stage 90. The engine section 86 of FIG. 2 also includes a plurality of stator vane structures 94A and 94B (generally referred to as "94") interspersed with the rotor stages 90 and the associated rotor shrouds 92. The first rotor stage 90A and its associated first rotor shroud 92A of FIG. 2, for example, are located next to and between the first stator vane structure 94A and the second stator vane structure 94B along the core flowpath 42. The second rotor stage 90B and its associated second rotor shroud 92B of FIG. 2 are located next to and downstream of the second stator vane structure 94B along the core flowpath 42. Here, the engine section 86 is shown as a two-stage section of the turbine engine 24; e.g., a two-stage HPT section. It is contemplated, however, the engine section 86 and its engine rotor 88 may alternatively be configured with a single stage or more than two stages.

Each rotor stage 90 includes a rotor base 96 (e.g., a disk or a hub) and a plurality of rotor blades 98 (e.g., turbine blades). The rotor blades 98 are arranged and may be equispaced circumferentially around the rotor base 96 and a rotational axis 100 of the engine rotor 88 (e.g., the propulsion system axis 28) in an array; e.g., an annular array. Each of the rotor blades 98 is connected to the rotor base 96 at or near a radial outer periphery of the rotor base 96. Each rotor blade 98, for example, may include an attachment (e.g., a root such as a dovetail root or a firtree root) inserted into and mated with a respective receptacle (e.g., slot such as a dovetail slot or a firtree slot) in the rotor base 96 to mechanically attach the respective rotor blade 98 to the rotor base 96. In another example, each rotor blade 98 may be welded or otherwise bonded to the rotor base 96. In still another example, each rotor blade 98 may be formed as an integral part of the rotor base 96.

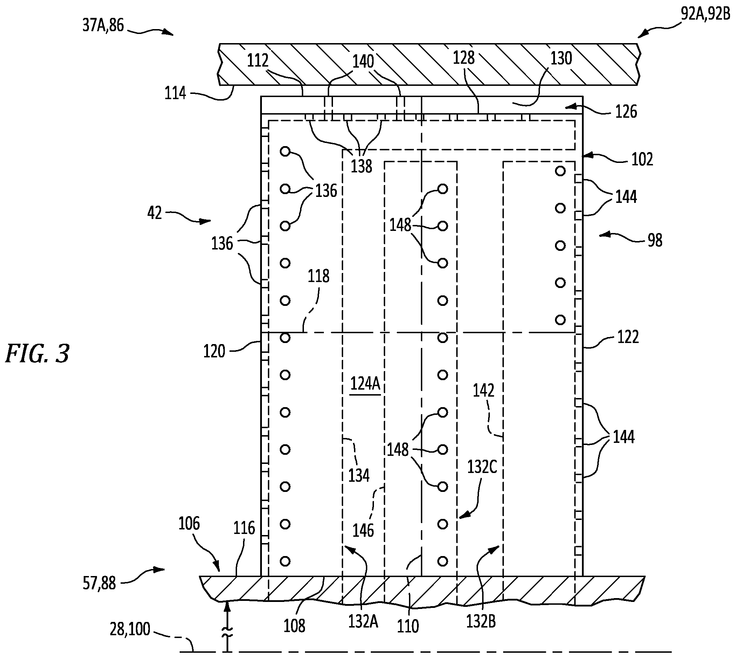

Referring to FIG. 3, each rotor blade 98 may be configured as or otherwise includes a blade airfoil 102; e.g., a turbine blade airfoil. This blade airfoil 102 is disposed radially outboard of and is connected to a platform 106 of the respective rotor stage 90 at a base 108 of the blade airfoil 102. The platform 106 of FIG. 3 is configured to form a radial inner peripheral boundary of a section of the core flowpath 42 that extends across the respective rotor stage 90. A respective circumferential section of the platform 106 may be configured as part of the respective rotor blade 98 where, for example, that rotor blade 98 is mechanically attached to the rotor base 96 (see FIG. 2). Alternatively, the platform 106 may be configured as part of the rotor base 96 (see FIG. 2) where, for example, the rotor blades 98 are bonded to or formed integral with the rotor base 96. The present disclosure, however, is not limited to the foregoing exemplary platform arrangements.

The blade airfoil 102 of FIG. 3 projects spanwise along a span line 110 of the respective rotor blade 98 and its blade airfoil 102 (e.g., generally radially respective to the rotor axis 100) from the airfoil base 108 to a tip 112 of the blade airfoil 102, and more generally to a tip of the respective rotor blade 98. The airfoil tip 112 of FIG. 3 is disposed radially inboard of and next to, but spaced slightly inward from, an inner flowpath surface 114 of the respective rotor shroud 92. The blade airfoil 102 of FIG. 3 thereby projects spanwise out from an outer flowpath surface 116 of the platform 106, substantially radially across the core flowpath 42, to the airfoil tip 112.

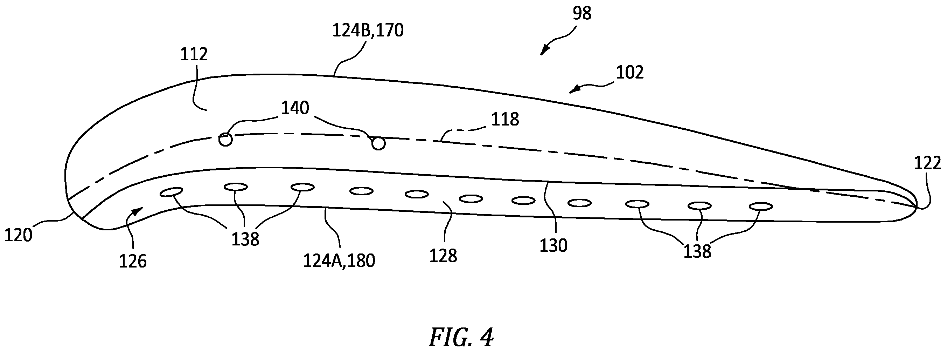

Referring to FIG. 4, the blade airfoil 102 extends longitudinally along a mean line 118 (e.g., a camber line) of the blade airfoil 102 from a leading edge 120 of the blade airfoil 102 to a trailing edge 122 of the blade airfoil 102. The blade airfoil 102 extends laterally (e.g., widthwise) between opposing sides 124A and 124B (generally referred to as "124") of the blade airfoil 102. The airfoil first side 124A of FIG. 4 is a concave, pressure side of the blade airfoil 102. The airfoil second side 124B of FIG. 4 is a convex, suction side of the blade airfoil 102. The airfoils sides 124 extend longitudinally between and may meet at the airfoil leading edge 120 and the airfoil trailing edge 122.

Referring to FIG. 3, the blade airfoil 102 may include a tip channel 126 disposed at the airfoil tip 112. This airfoil tip channel 126 projects spanwise into the blade airfoil 102 from the airfoil tip 112 to a tip shelf 128. Referring to FIG. 4, the airfoil tip channel 126 projects laterally into the blade airfoil 102 from the airfoil first side 124A to a channel side 130. The airfoil channel side 130 of FIG. 4 is thereby laterally recessed inward from the airfoil first side 124A. The airfoil tip channel 126 of FIG. 4 extends longitudinally through the blade airfoil 102 from (or about) the airfoil leading edge 120 to (or about) the airfoil trailing edge 122. In other embodiments, however, it is contemplated the airfoil tip channel 126 may alternatively project longitudinally partially into the blade airfoil 102 from the airfoil leading edge 120 or the airfoil trailing edge 122, or the airfoil tip channel 126 may extend longitudinally partially within the blade airfoil 102. In still other embodiments, it is contemplated the airfoil tip channel 126 may be omitted from the rotor blade 98 and its blade airfoil 102.

Referring to FIG. 3, each rotor blade 98 and its blade airfoil 102 may also include one or more internal cooling circuits 132A-C (generally referred to as "132"). Each of these cooling circuits 132 is configured to flow cooling air internally within the respective rotor blade 98 and its blade airfoil 102 to facilitate internal air cooling of the respective rotor blade 98 and its blade airfoil 102. Each of the cooling circuits 132 may also be configured to deliver the cooling air to one or more cooling apertures (e.g., film cooling apertures, effusion apertures, etc.) to film cool and/or otherwise facilitate external air cooling of the blade airfoil 102.

The first cooling circuit 132A may be configured as a leading edge and/or tip cooling circuit. The first cooling circuit 132A of FIG. 3, for example, includes a first circuit channel 134, one or more leading edge cooling apertures 136, one or more shelf cooling apertures 138 and/or one or more tip cooling apertures 140. The first circuit channel 134 of FIG. 3 projects spanwise into the blade airfoil 102 from the airfoil base 108 towards (or to) the airfoil tip 112. The first circuit channel 134 is fluidly coupled to each of the first circuit cooling apertures 136, 138, 140. The leading edge cooling apertures 136 are arranged spanwise along the airfoil leading edge 120 and may be formed in one or both of the airfoil sides 124. The shelf cooling apertures 138 are arranged longitudinally along and may be formed in the tip shelf 128 (see also FIG. 4). The tip cooling apertures 140 are arranged longitudinally along and may be formed in the airfoil tip 112 (see also FIG. 4).

The second cooling circuit 132B may be configured as a trailing edge cooling circuit. The second cooling circuit 132B of FIG. 3, for example, includes a second circuit channel 142 and one or more trailing edge cooling apertures 144. The second circuit channel 142 of FIG. 3 projects spanwise into the blade airfoil 102 from the airfoil base 108 towards (or to) the airfoil tip 112. The second circuit channel 142 is fluidly coupled to each of the trailing edge cooling apertures 144. The trailing edge cooling apertures 144 are arranged spanwise along the airfoil trailing edge 122 and may be formed in one or both of the airfoil sides 124.

The third cooling circuit 132C may be configured as an intermediate side cooling circuit. The third cooling circuit 132C of FIG. 3, for example, includes a third circuit channel 146 and one or more side cooling apertures 148. The third circuit channel 146 of FIG. 3 projects spanwise into the blade airfoil 102 from the airfoil base 108 towards (or to) the airfoil tip 112. The third circuit channel 146 is fluidly coupled to each of the side cooling apertures 148. The side cooling apertures 148 may be arranged spanwise along the blade airfoil 102 and may be formed in one or both of the airfoil sides 124.

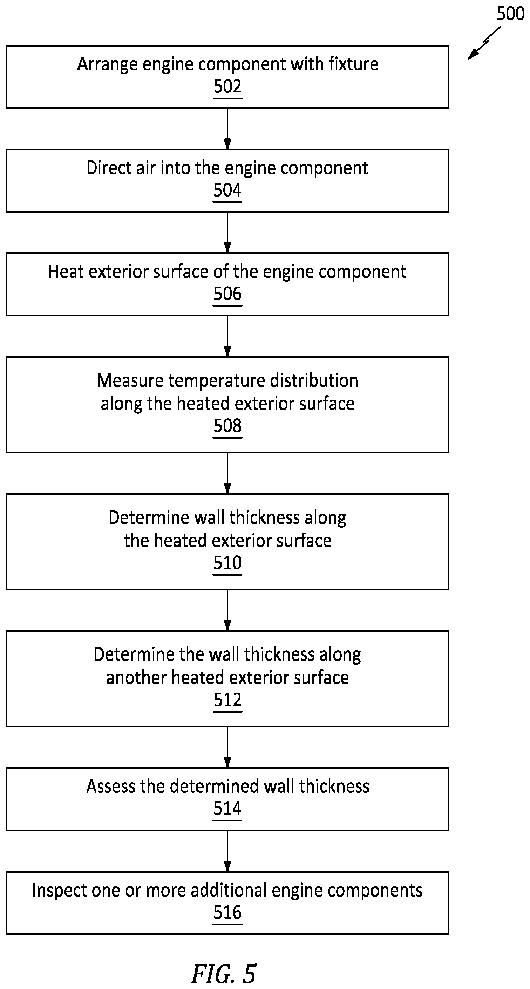

FIG. 5 is a flow diagram of a method 500 for inspecting one or more components of an aircraft powerplant. For ease of description, this inspection method 500 is described below with reference to the aircraft powerplant 20 of FIG. 1, and the inspected components are described below as components of the turbine engine 24; e.g., turbine engine components. More particularly, the inspected components are described below as a respective to-be-inspected set of the rotor blades 98 of FIGS. 2-4. The present disclosure, however, is not limited to inspecting such an exemplary engine component. For example, the method 500 may alternatively be performed to inspect one or more of the rotor shrouds 92 and/or one or more of the stator vane structures 94. Moreover, it is contemplated the inspection method 500 may alternatively be performed for components of various other powerplant arrangements.

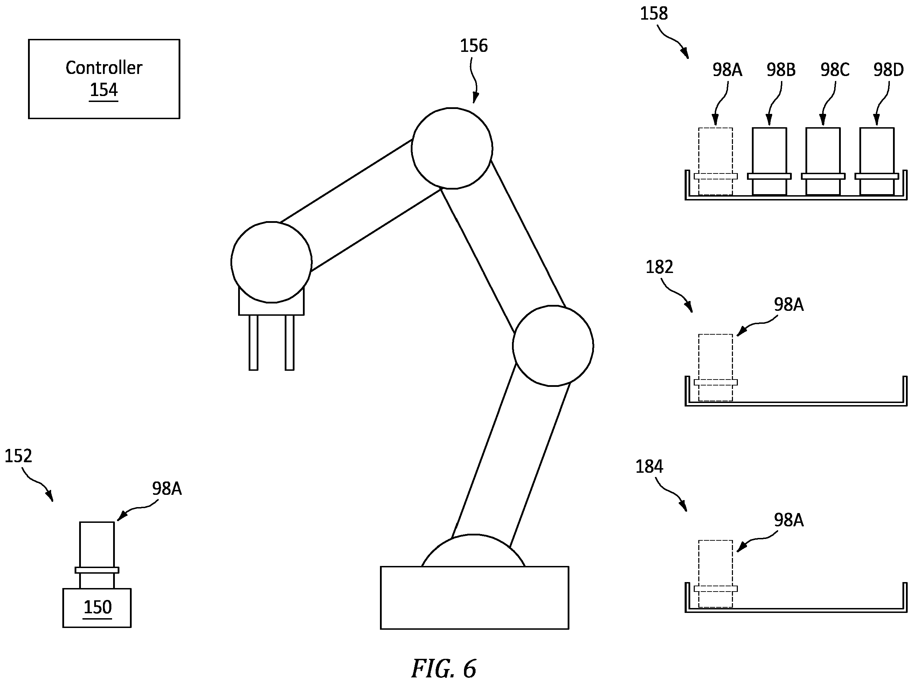

In step 502, referring to FIG. 6, a first of the rotor blades 98A is arranged with a fixture 150 in an inspection area 152. A controller 154, for example, may signal a robotic manipulator 156 to (a) pick up the first rotor blade 98A at a source area 158, (b) move the first rotor blade 98A from the source area 158 to the inspection area 152, and (c) place the first rotor blade 98A in the fixture 150 at the inspection area 152. At the beginning of the inspection method 500, the first rotor blade 98A may be one of a plurality of the rotor blades (e.g., 98A-D (generally referred to as "98")) located at the source area 158 for subsequent inspection. At this source area 158, the to-be-inspected rotor blades 98 may be arranged in a bin or other open container or fixture which orients those rotor blades 98 for picking up by the robotic manipulator 156. For ease of description, the robotic manipulator 156 is generally described herein as a multi-axis robotic arm with a gripping end effector. The present disclosure, however, is not limited to such an exemplary robotic manipulator. For example, it is contemplated the robotic manipulator 156 may alternatively be configured as gantry manipulator. Moreover, in other embodiments, it is contemplated one or more of the operations performed herein by the robotic manipulator 156 may alternatively be performed manually by a technician.

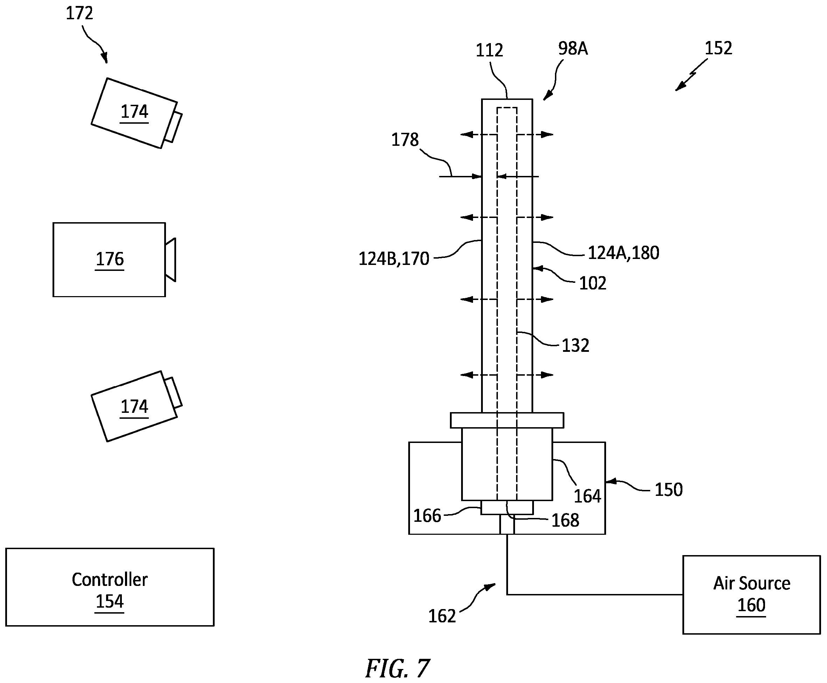

In step 504, referring to FIG. 7, pressurized air is directed into one or more of the cooling circuits 132 in the first rotor blade 98A; e.g., cooling circuits 132A-C of FIG. 3. For example, an air source 160 may be fluidly coupled to each cooling circuit 132 in the first rotor blade 98A through an air circuit 162. The air circuit 162 of FIG. 7 projects longitudinally from the air source 160, through the fixture 150, to an attachment 164 of the first rotor blade 98A. Next to the attachment 164, the air circuit 162 may include a manifold 166 fluidly coupled to an airflow inlet 168 into each cooling circuit 132. The controller 154 may signal the air source 160 to supply a flow of the pressurized air to the air circuit 162. The air circuit 162 may direct that flow of the pressurized air into each cooling circuit 132. The pressurized air may subsequently flow through each cooling circuit 132 and out of the first rotor blade 98A through the respective cooling apertures (e.g., 136, 138, 140, 144 and/or 148 in FIG. 3) in the blade airfoil 102 of the first rotor blade 98A. Examples of the air source 160 include, but are not limited to, a pressurized air tank paired with a control valve, a compressor, or a shop air supply.

In step 506, an exterior surface 170 of the first rotor blade 98A and its blade airfoil 102 are heated. This exterior surface 170 may be a convex, suction side surface of the blade airfoil 102 at the airfoil second side 124B. However, it is contemplated the exterior surface 170 may alternatively be a concave, pressure side surface of the blade airfoil 102 at the airfoil first side 124A. The controller 154 may signal a non-contact heater 172 to energize and heat the exterior surface 170. This non-contact heater 172 of FIG. 7 is disposed remote from the first rotor blade 98A and the exterior surface 170 being heated. The non-contact heater 172, more particularly, is spaced from the first rotor blade 98A and the exterior surface 170 being heated by an air gap. The non-contact heater 172 may include one or more heat sources 174 such as pulsed lights. The present disclosure, however, is not limited to such exemplary heat sources. Note, this heating step 506 is performed while the pressurized air is supplied to each cooling circuit 132 of the first rotor blade 98A.

In step 508, a temperature distribution along the heated exterior surface 170 is measured. The controller 154, for example, may signal a non-contact temperature sensor 176 to (e.g., optically) measure the temperature distribution along the heated exterior surface 170. This temperature distribution may be measured for an entirety of the heated exterior surface 170, or alternatively at least (or only) a select region of the heated exterior surface 170 which may include one or more of the cooling apertures (e.g., 136, 138, 140, 144 and/or 148 in FIG. 3). This temperature distribution may map a surface temperature measured spanwise and longitudinally along the heated exterior surface 170. The temperature distribution may thereby map temperature gradients spanwise and longitudinally across the heated exterior surface 170. The temperature sensor 176 may subsequently provide measurement data back to the controller 154 indicative of the temperature distribution. An example of the temperature sensor 176 is an infrared (IR) camera. This infrared camera may be configured to measure a broad spectrum of infrared light or a focused spectrum of infrared light; e.g., mid-wave (MW) infrared light, long-wave (LW) infrared light, etc. Moreover, multiple infrared cameras may be provided to measure different spectrums of infrared light. In some embodiments, the infrared light to be measured may be selected based on material(s) forming the inspected component(s), particularly coating material(s) on the inspected component(s). The present disclosure, however, is not limited to such an exemplary temperature sensor. Note, this measurement step 508 is performed while (a) the pressurized air is supplied to each cooling circuit 132 of the first rotor blade 98A and (b) during or (e.g., just) subsequent to the heating of the exterior surface 170.

In step 510, a wall thickness 178 of the first rotor blade 98A along the heated exterior surface 170 is determined. The controller 154, for example, may process the measurement data received from the temperature sensor 176 using an algorithm that correlates the measured temperature distribution to the wall thickness 178. For example, where the measured temperature distribution indicates a local temperature of the heated exterior surface 170 at a first location is relatively high, the correlation may indicate the wall thickness 178 of the first rotor blade 98A at that first location has a relatively small value. By contrast, where the measured temperature distribution indicates a local temperature of the heated exterior surface 170 at a second location is relatively low, the correlation may indicate the wall thickness 178 of the first rotor blade 98A at that second location has a relatively large value. The wall thickness 178 of the first rotor blade 98A may thereby be determined for the entirety of the heated exterior surface 170, or alternatively at least (or only) the select region of the heated exterior surface 170 which may include the one or more of the cooling apertures (e.g., 136, 138, 140, 144 and/or 148 in FIG. 3). In some embodiments, the controller 154 may utilize artificial intelligence (AI) and/or machine learning to provide more accurate correlations which, for example, can read a signature of the temperature distribution to locate the apertures (e.g., 136, 138, 140, 144 and/or 148 in FIG. 3), internal ribs, walls and/or other features of the blade airfoil 102.

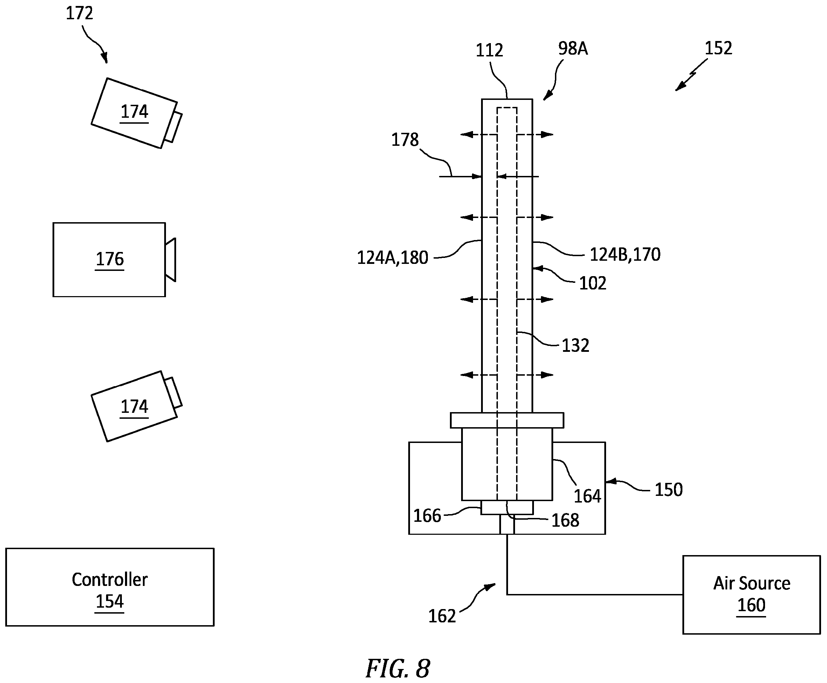

In step 512, the steps 504, 506, 508 and 510 may be repeated to determine the wall thickness 178 of the first rotor blade 98A along another exterior surface 180 of the first rotor blade 98A. The controller 154, for example, may signal the robotic manipulator 156 (see FIG. 6) to reverse an orientation of the first rotor blade 98A as shown in FIG. 8 and the steps 504, 506, 508 and 510 may be repeated. This exterior surface 180 may be the concave, pressure side surface of the blade airfoil 102 at the airfoil first side 124A. However, it is contemplated the exterior surface 180 may alternatively be the convex, suction side surface of the blade airfoil 102 at the airfoil second side 124B.

In step 514, the determined wall thickness 178 of FIGS. 7 and 8 is assessed. The controller 154, for example, may compare the determined wall thickness 178 to a wall thickness specification for a rotor blade type (e.g., a rotor blade model number) being inspected. Where the wall thickness 178 is within tolerances identified in the wall thickness specification, the controller 154 may identify the first rotor blade 98A as satisfying the wall thickness specification and being suitable for installation into the turbine engine 24 (see FIG. 2). In this situation, referring to FIG. 6, the controller 154 may signal the robotic manipulator 156 to (a) pick up the first rotor blade 98A at the inspection area 152, (b) move the first rotor blade 98A from the inspection area 152 to a designated area 182 for compliant rotor blades, and (c) place the first rotor blade 98A at the designated area 182 for compliant rotor blades. At this designated area 182, the inspected first rotor blade 98 may be arranged in an acceptance bin or other open container or fixture for subsequent use. By contrast, where the wall thickness 178 (see FIGS. 7 and 8) is outside the tolerances identified in the wall thickness specification, the controller 154 may identify the first rotor blade 98A as not satisfying the wall thickness specification and not being suitable for installation into the turbine engine (see FIG. 2). In this situation, the controller 154 may signal the robotic manipulator 156 to (a) pick up the first rotor blade 98A at the inspection area 152, (b) move the first rotor blade 98A from the inspection area 152 to a designated area 184 for non-compliant rotor blades, and (c) place the first rotor blade 98A at the designated area 184 for non-compliant rotor blades. At this designated area 184, the inspected first rotor blade 98 may be arranged in a rejection bin or other open container or fixture for subsequent disposal, further inspection, and/or remanufacture.

In step 516, the steps 502, 504, 506, 508, 510, 512 and 514 may be repeated one or more times to facilitate inspections of the other rotor blades (e.g., 98B-D).

In some embodiments, the inspection method 500 may be performed substantially or completely autonomously. Such autonomous inspection may speed up the inspection method as well as ensure data obtained through the inspection method is recorded and tracked.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A method of inspection, comprising:
arranging a turbine engine component with a fixture, the turbine engine component comprising an internal cooling circuit and a first exterior surface;
directing air into the internal cooling circuit;
heating the first exterior surface, while the air is directed into the internal cooling circuit, such that the first exterior surface is a heated first exterior surface;
measuring a first temperature distribution along the heated first exterior surface to provide first measurement data indicative of the first temperature distribution; and
determining a wall thickness of the turbine engine component along the first exterior surface using the first measurement data.

2. The method of claim 1, further comprising determining whether the wall thickness of the turbine engine component along the first exterior surface satisfies a wall thickness specification for the turbine engine component.

3. The method of claim 2, further comprising moving the turbine engine component into a designated area using a robotic manipulator when the wall thickness of the turbine engine component along the first exterior surface is determined to satisfy the wall thickness specification.

4. The method of claim 2, further comprising moving the turbine engine component into a designated area using a robotic manipulator when the wall thickness of the turbine engine component along the first exterior surface is determined not to satisfy the wall thickness specification.

5. The method of any preceding claim, wherein the wall thickness of the turbine engine component along the first exterior surface is determined utilizing artificial intelligence.

6. The method of any preceding claim, wherein the wall thickness of the turbine engine component along the first exterior surface is determined utilizing machine learning.

7. The method of any preceding claim, further comprising:
heating a second exterior surface of the turbine engine component, while the air is directed into the internal cooling circuit, such that the second exterior surface is a heated second exterior surface;
measuring a second temperature distribution along the heated second exterior surface to provide second measurement data indicative of the second temperature distribution; and
determining the wall thickness of the turbine engine component along the second exterior surface using the second measurement data.

8. The method of any preceding claim, wherein the air is directed through the fixture and into the internal cooling circuit.

9. The method of any preceding claim, wherein the internal cooling circuit comprises one or more cooling apertures formed in the first exterior surface.

10. The method of any preceding claim, wherein:
the first exterior surface is heated using a non-contact heat source; or
the first exterior surface is heated using a pulsed light.

11. The method of any preceding claim, wherein:
the first temperature distribution is measured using a non-contact temperature sensor; or
the first temperature distribution is measured using an infrared camera.

12. The method of any preceding claim, wherein:
the turbine engine component comprises an airfoil; or
the turbine engine component comprises a turbine blade; or
the turbine engine component comprises a turbine vane.

13. A method of inspection, comprising:
arranging a turbine engine component with a fixture, the turbine engine component comprising an internal cooling circuit and a first exterior surface, and the internal cooling circuit comprising one or more cooling apertures formed in the first exterior surface;
heating the first exterior surface using a light source;
measuring a first temperature distribution along at least a first area of the first exterior surface using a camera, during and/or after the heating of the first exterior surface, to provide first measurement data indicative of the first temperature distribution, the first area of the first exterior surface comprising at least one of the one or more cooling apertures; and
determining a wall thickness of the turbine engine component along an entirety of the first area of the first exterior surface using the first measurement data,
wherein, optionally:
the light source comprises a pulsed light; and
the camera comprises an infrared camera.

14. The method of claim 13, further comprising supplying pressurized air to the internal cooling circuit during the heating of the first exterior surface and the measuring of the first temperature distribution.

15. A method of inspection, comprising:
arranging a turbine engine component with a fixture using a robotic manipulator, the turbine engine component comprising a first exterior surface;
heating the first exterior surface using a light source;
measuring a first temperature distribution along the first exterior surface using a camera, during and/or after the heating of the first exterior surface, to provide first measurement data indicative of the first temperature distribution;
determining a wall thickness of the turbine engine component along the first exterior surface using the first measurement data; and
determining whether the wall thickness of the turbine engine component along the first exterior surface satisfies a wall thickness specification, and one of:
moving the turbine engine component into a first designated area using the robotic manipulator when the wall thickness of the turbine engine component along the first exterior surface is determined to satisfy the wall thickness specification; and
moving the turbine engine component into a second designated area using the robotic manipulator when the wall thickness of the turbine engine component along the first exterior surface is determined not to satisfy the wall thickness specification.
